# EUROPÄISCHE PATENTSCHRIFT

(11) **EP 2 154 088 B1**
(45) Veröffentlichungstag und Bekanntmachung des Hinweises auf die Patenterteilung: **15.05.2013**
(21) Anmeldenummer: 09450146.7
(22) Anmeldetag: 07.08.2009
(51) Int. Cl.: B65G 1/137

(54) **Verfahren und System zur Kommissionierung von in einem Palettenlager gelagerten Waren**
Method and system for commissioning articles stored in a pallet store
Procédé et système pour la préparation de commandes à partir d'articles entreposés dans un magasin de palettes

(30) Priorität: 12.08.2008 AT 12532008
(43) Veröffentlichungstag der Anmeldung: 17.02.2010
(73) Patentinhaber: Moosburger Logistics Network & Development KG, 8042 Graz (AT)
(72) Erfinder: Moosburger, Michael, 8072 Fernitz (AT); Gleiss, Martin, 4863 Seewalchen (AT)
(74) Vertreter: Schwarz & Partner

(56) Entgegenhaltungen:
- EP-A1- 1 767 472
- EP-A2- 0 048 832
- EP-A2- 0 425 221
- DE-A1- 10 019 632
- JP-A- 4 116 001

## Beschreibung

Die Erfindung betrifft ein Verfahren zur halbautomatischen Kommissionierung von Waren, und dessen Umsetzung mit Hilfe von automatisierten und halbautomatischen Fördersystemen und Ware zum Mann - Arbeitsplätzen, wie z.B. aus der DE 100 19 632 A1 bekannt.

Die heute eingesetzten Verfahren zur Kommissionierung von FMCG's (Fast Moving Consumer Goods) sind folgende:
a) Manuelle Kommissioniermethoden:
   Diese Kommissioniermethoden haben gemeinsam, dass ein Mitarbeiter unter Zurücklegung von mehr oder weniger großen Wegstrecken durch das Lager Ware für Kundenaufträge zusammenstellt. Der Mitarbeiter wird dabei durch Scanner, Voice-Befehle, Lichter (pick by light) oder Etiketten und Kommissionierlisten unterstützt. Folgende Abläufe werden dabei angewandt:
      - Klassische manuelle Kommissionierung: Der Arbeiter fährt oder geht durch Regale und sammelt (pickt) einzelne Artikel auf Transporthilfsmittel, die zur Auslieferung an die Kunden verwendet werden.
      - Umgekehrte manuelle Kommissionierung: Wenn die Anzahl der Artikel kleiner ist als die Anzahl der zu bedienenden Kunden, fährt der Arbeiter mit der auf einer Artikelpalette befindlichen Ware durch ein Lager und teilt die Artikel auf bereitstehende Kunden-Transporthilfsmittel auf.
b) Automatisationsunterstützte Kommissionierverfahren:
   Hier wird versucht die manuelle Arbeit des Kommissionierers durch Maschinen zu unterstützen bzw. zu ersetzen. Man unterscheidet teilautomatisierte und voll automatisierte Verfahren:
      - Teilautomatisiert: Hier wird Ware, die an Kunden zu verteilen ist zuerst von der Original-Palette in Einzelpackungen entstapelt. Dieser Vorgang kann vollautomatisch oder teilautomatisiert erfolgen. Danach werden diese Einzelpackungen, sog. Colli, in verschiedenen Lagersystemen eingelagert. Ein Kundenauftrag wird dann derart zusammengestellt, dass diese Colli einzeln an einen automatisierten oder teilautomatisierten Arbeitsplatz angedient werden, an dem der Kundenauftrag durch Einsortieren der Colli in Kunden-Transporthilfsmittel zusammengestellt wird.
      - Voll automatisiert: Hier sind sowohl der Entstapelvorgang der Colli von der Original-Palette wie auch der Stapelvorgang der Colli auf die Kunden-Transporthilfsmittel komplett durch Maschinen abgebildet. Ebenfalls wird hier die Original-Palette zuerst entstapelt, die einzelnen Colli in Kisten, Tablaren oder Kanalläger zwischengelagert und anschließend dem Kommissionierplatz angedient, an dem sie automatisiert durch Roboter oder andere Technologien zum Kunden-Transporthilfsmittel (Kundenpalette, Rollbehälter, Dolly,..) zusammengeschlichtet wird.

Diese automatisierten Verfahren weisen daher folgende Merkmale auf:
- Vereinzeln der Original-Palette in Einzel-Colli
- Zwischenlagerung von Einzel-Colli
- Zusammenschichten von Einzel-Colli zu Kundenaufträgen

Folgende Probleme ergeben sich bei diesen automatisierten Verfahren:
- FMCG's werden mindestens 2x angegriffen (je nach Automatisierungsgrad durch Mensch oder Maschine). Bei einer rein manuellen Kommission wie oben beschrieben passiert das nur 1x. Daher ist die rein wirtschaftliche Rentabilität derartiger Systeme im Vergleich zur manuellen Kommission nur selten gegeben.
- FMCG's werden mittels außerordentlich teurer Lagertechnik als Einzel-Colli zwischengelagert.
- Hochkomplexe Systeme: Diese Verfahren werden in der Regel über ein manuelles oder automatisches Hochregallager, eine Entstapeleinheit, ein Behälterlager für die Colli, eine Stapeleinheit und die jeweils dazwischen liegende Fördertechnik und Softwaresteuerung abgewickelt.
- Derartige Systeme sind in der Regel ausschließlich für A, B oder C-Artikel geeignet. A-Artikel sind häufig benötigte Artikel, die auch als schnell drehend bezeichnet werden. B-Artikel sind durchschnittlich oft benötigte Artikel, die auch als mittel drehend bezeichnet werden. C-Artikel sind selten benötigte Artikel, die auch als langsam drehend bezeichnet werden. Daher müssen oft mehrere unterschiedliche automatisierte Systeme kombiniert werden, um die komplette Auftragsbearbeitung abzubilden. Das führt zur Aufsplittung von Aufträgen in unterschiedlichen Kommissionierbereichen. Die kommissionierte Ware muss dann, um die Auslastung der zum Versand eingesetzten Fahrzeuge zu gewährleisten, nach der Fertigstellung noch einmal verdichtet werden. Während dieses Verdichtungsvorgangs wird die Ware dann das dritte Mal angegriffen.

### Vorteile dieser automatisierten Verfahren und Systeme:

- Bessere Ergonomie für die Kommissionierer als bei der rein manuellen Kommissionierung, weil die Arbeitsplätze für den Mitarbeiter optimiert werden können, insbesondere die Arbeitshöhe eingestellt werden kann.
- In der Regel etwas geringerer Personalbedarf, da die Wegstrecken für den Kommissionierer wegfallen. Diesem Vorteil steht aber ein hoher Aufwand für ausgebildetes Wartungspersonal gegenüber.

Ausgehend von der Problematik des vorgenannten Standes der Technik liegt der vorliegenden Erfindung die Aufgabe zugrunde, ein Verfahren zur Kommissionierung von Waren bereitzustellen, mit dem Colli direkt von einer Quell-Palette auf ein Kunden-Transporthilfsmittel, wie eine Kundenpalette, ein Rollbehälter, etc. gebracht werden können, ohne dass dabei die systembedingten Nachteile der klassisch manuellen Kommission, nämlich lange Wegzeiten des Kommissionierers und schlechte Ergonomie seines Arbeitsplatzes zum Tragen kommen. Gleichzeitig sollen aber auch aufwändige Komponenten und Prozessschritte der heute am Markt befindlichen automatisierten Systeme und Verfahren vermieden werden, nämlich:
- Entstapeleinheiten bzw. Entstapelarbeitsplätze
- Zwischenlagerung in teuren, aufwändigen Kanallagern oder Colli-Lagern
- Entsprechender Stahlbau und Fördertechniken
- Softwaresteuerung für diese komplexen Systeme
- Nachträgliches Zusammenführen von Teil-Kundenaufträgen zu einer Kundenpalette, dadurch bedingt, dass A-, B- und C-Artikel in getrennten Systemen verarbeitet werden müssen.

Eine wesentliche Aufgabe der vorliegenden Erfindung besteht auch darin, dass sie durch Standard-Fördertechnik-Komponenten realisierbar sein soll, wodurch eine billige, schnelle und verlässliche Konzipierung und Bauweise von entsprechenden Kommissionierlagern und deren Betrieb ermöglicht wird.

Die vorliegende Erfindung löst diese Aufgabe durch ein Kommissionierverfahren mit den kennzeichnenden Merkmalen des Anspruchs 1 und durch ein Kommissioniersystem mit den kennzeichnenden Merkmalen des Anspruchs 6. Vorteilhafte Ausgestaltungen der Erfindung sind in den Unteransprüchen dargelegt.

Das Wesen der Erfindung liegt in der Tatsache, dass die Waren im gesamten Verlauf des Wareneingangs, der Zwischenlagerung und der Kommissionierung nur ein einziges Mal manuell gehandhabt werden. Das Verfahren erlaubt es, Ware in einem einzigen Prozessschritt direkt von einer Quell-Palette - das ist jene, auf der die Ware angeliefert wurde - auf das Kunden-Transporthilfsmittel, das an den Kunden ausgeliefert wird, zu verbringen, ohne dass die systembedingten Nachteile langer Wege und mangelhafter Ergonomie konventioneller manueller Systeme zum Tragen kommen. Die Flexibilität des manuellen Stapelns bleibt jedoch voll erhalten. Gleichzeitig vermeidet die Erfindung den Einsatz komplexer und störanfälliger Stapel- und Entstapeleinheiten ebenso wie die kostspielige Zwischenlagerung von Einzel-Colli.

Erfindungsgemäß erfolgt die Kommissionierung von auf Quell-Paletten in einem Palettenlager gelagerten Waren gemäß Kundenaufträgen durch das Zuführen von Quell-Paletten über eine Zuführ-Förderstrecke zu zumindest einem Kommissionierarbeitsplatz, der Packstationen aufweist, in denen Kunden-Transporthilfsmittel zur Aufnahme der zu kommissionierenden Waren bereitgestellt werden, das händische Kommissionieren von Waren aus der Quell-Palette in die Kunden-Transporthilfsmittel an all jenen Packstationen, die gemäß den Kundenaufträgen Waren aus der Quell-Palette zu erhalten haben, das Ausschleusen der Quell-Palette aus dem Kommissionierarbeitsplatz auf einer Abzugsförderstrecke zurück in das Palettenlager oder zu einem weiteren Kommissionierarbeitsplatz. Wesentlich ist dabei, dass aufgrund der Kommissionierung direkt von der Quell-Palette auf die Kunden-Transporthilfsmittel keine Wegzeiten für Bedienpersonen anfallen und kein wie im Stand der Technik vorgesehener Zweistufenprozess zur Anwendung gebracht wird, bei dem die Waren der Quell-Palette zunächst vereinzelt und dann erst mit oder ohne Zwischenlagerung auf das Ziel-Transporthilfsmittel manuell oder automatisiert geschlichtet werden. Damit die Kunden-Transporthilfsmittel möglichst voll gefüllt werden können, ist in einer Ausführungsform auch vorgesehen, zu jedem Zeitpunkt für einen Kunden nur ein einziges Kunden-Transporthilfsmittel an einer Packstation eines Arbeitsplatzes bereitzustellen. Wenn dieses gefüllt ist, wird das nächste Kunden-Transporthilfsmittel für diesen Kunden an derselben oder einer anderen Packstation desselben oder eines anderen Kommissionierarbeitsplatzes bereitgestellt.

Die Erfindung sieht weiters einen Sortierpuffer für Quell-Paletten vor, der realisiert wird, indem die Zuführ-Förderstrecke doppelt so lange ausgelegt wird, wie eine maximal vorgesehene Zahl an zur gleichen Zeit vom Palettenlager zu den Kommissionierarbeitsplätzen auszulagernden Quell-Paletten erfordern würde, und indem die Zuführ-Förderstrecke bi-direktional verfahrbar ist. Dadurch kann wahlfrei jede Quell-Palette auf der Zuführ-Förderstrecke jederzeit zu jedem Kommissionierarbeitsplatz zugeführt werden.

Erfindungsgemäß werden die Quell-Paletten am Kommissionierarbeitsplatz auf einem Fahrzeug zu den Packstationen bewegt, wodurch die Bedienperson vom Verschieben schwerer Lasten entbunden ist. Das Fahrzeug weist einen Arbeitsplatz, insbesondere einen Stehplatz, für die Bedienperson auf, so dass sich die Bedienperson während des Kommisionierens mit dem Fahrzeug mitfährt und im Vorbeifahren Waren aus den Quell-Paletten an die Kunden-Transporthilfsmittel übergeben kann.

Um der Bedienperson einen ergonomisch optimalen Arbeitsplatz zu bieten, ist weiters vorgesehen, dass die Quell-Paletten am Kommissionierarbeitsplatz in Abhängigkeit von ihrer Beladungshöhe und von der Größe der Bedienperson in einer für die Bedienperson ergonomische Höhe positioniert werden. Für denselben Zweck ist weiter vorgesehen, dass die Kunden-Transporthilfsmittel in den Packstationen des Kommissionierarbeitsplatzes in Abhängigkeit von ihrer Beladungshöhe und von der Größe der Bedienperson in einer für die Bedienperson ergonomischen Arbeitshöhe positioniert werden.

Zur Vermeidung von Fehlkommissionierungen ist es bevorzugt, wenn immer nur das jeweils zu kommissionierende Kunden-Transporthilfsmittel in der Arbeitshöhe positioniert wird. Eine weitere Verringerung möglicher Fehlkommissionierung wird erzielt, indem in jeder Packstation automatische Kommissionier-Plausibilitätskontrollen durchgeführt werden, wie z.B. Wiegen des Kunden-Transporthilfsmittels, und bei Erkennen, dass die vorgesehene Anzahl an Waren einer Quell-Palette kommissioniert wurde, das Kunden-Transporthilfsmittel aus der Arbeitshöhe fährt.

Um die Auslegung der Kommissionierarbeitsplätze und des Gesamtsystems einfach zu halten und die Quell-Palettenströme zu minimieren und so die Investitionskosten dramatisch zu senken ist weiters vorgesehen, dass langsam drehende C-Waren eines Kundenauftrages in Behältern, insbesondere Einzel-Colli, auf Tablaren oder unverpackt direkt auf der Fördertechnik dem Kommissionierarbeitsplatz zugeführt werden und die Bedienperson die Behälter in das dem Kundenauftrag zugeordnete Kunden-Transporthilfsmittel packt. Somit können am selben Kommissionierarbeitsplatz von schnell bis langsam drehenden Waren alle Waren eines Kundenauftrags im selben Kunden-Transporthilfsmittel platziert werden.

Weitere Vorteile und Merkmale der Erfindung ergeben sich aus der nachfolgenden Beschreibung eines Ausführungsbeispiels unter Bezugnahme auf die Zeichnungen. In den Zeichnungen zeigen:
Fig. 1 ein Schaubild des Warenflusses vom Wareneingang bis zum Warenausgang gemäß der vorliegenden Erfindung;
Fig. 2 eine schematische Darstellung der logischen Pfade einer Quell-Palette im Zuge des erfindungsgemäßen Kommissionierverfahrens;
Fig. 3 eine schematische Darstellung eines Kommissionierarbeitsplatzes gemäß der Erfindung;
Fig. 4 eine schematische Draufsicht eines Kommissionierarbeitsplatzes und wesentlicher Förderstrecken gemäß der Erfindung; und
Fig. 5 eine schematische Seitenansicht des Kommissionierarbeitsplatzes von Fig. 4.

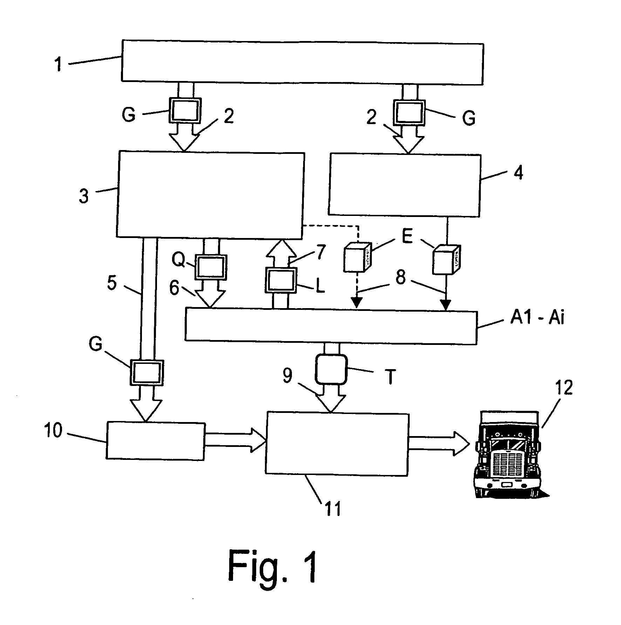

Zunächst wird anhand von Fig. 1 bis Fig. 3 der Warenfluss gemäß der vorliegenden Erfindung erläutert. Im Zuge des Wareneingangs 1 werden angelieferte Paletten G mithilfe von Standard-Fördertechnik 2 direkt in ein Palettenlager 3 verbracht und verbleiben dort bis zu dem Zeitpunkt, an dem Ware von einer Palette G für die Zusammenstellung von Kundenaufträgen benötigt wird. Die am Wareneingang 1 angelieferten Paletten G stammen entweder von Lieferungen mittels Transportfahrzeugen oder aus einer hauseigenen Produktion. Das Palettenlager 3 ist bevorzugt ein Standard-Hochregallager, das sowohl manuell mit Staplern als auch automatisch betrieben werden kann.

In einer ersten Ausführungsform der Erfindung kommen nur A- und B-Waren in das Palettenlager 3, Paletten G mit C-Waren werden dagegen ebenfalls mithilfe der Fördertechnik 2 in ein Paletten Pick-to-Belt Lager 4 verbracht.

In einer alternativen Ausführungsform werden auch die Paletten G mit C-Waren in das Palettenlager 3 verbracht und dort verarbeitet. Der Vorteil dieser Lösung liegt in einer reduzierten Komplexität von Hard- und Software, da ein Lagertyp weniger benötigt wird. Beispielsweise könnte an den äußeren Randbereichen des Palettenlagers 3 eine Bühne montiert sein, auf der ein Förderband läuft, auf das direkt gepickt wird. Andererseits bietet die obige erste Ausführungsform den Vorteil, dass ein Pick-to-Belt Lager speziell für die jeweiligen Anforderungen an C-Waren ausgelegt werden kann.

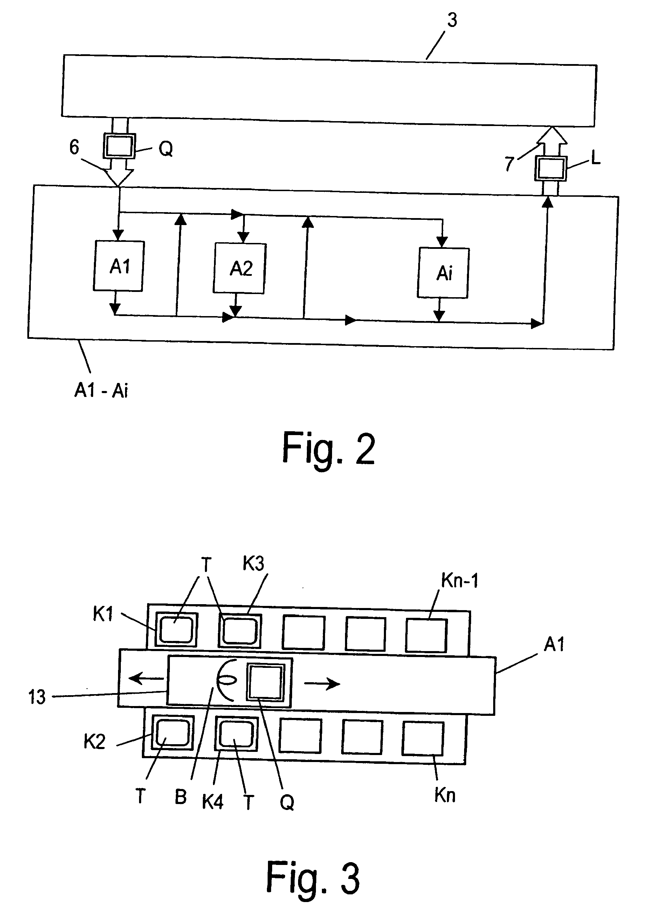

Die Bearbeitung der Kundenaufträge erfolgt Leitrechner-gesteuert in Batches, wobei bevorzugt mehrere Kundenaufträge zur gemeinsamen Bearbeitung zusammengefasst werden. Wie in Fig. 3 zu sehen ist jedem Kundenauftrag eine der Packstellen K1 - Kn zugeordnet, mehrere Packstellen K1 - Kn sind einer Bedienperson B an einem Kommissionierarbeitsplatz Ai zugeordnet, wobei mehrere gleichartige Kommissionierarbeitsplätze A1 - Ai vorgesehen sind, die je nach Arbeitsaufwand bemannt werden können. Die Anzahl der bemannten Kommissionierarbeitsplätze A1 - Ai ist durch die Anzahl der Kundenaufträge, deren Inhalt, durch die gewünschte Bearbeitungszeit und durch die Leistung der Bedienpersonen bestimmt. Dabei wird vom Leitrechner eine Gleichauslastung für die einzelnen Kommissionierarbeitsplätze A1 - Ai errechnet und entsprechend berücksichtigt. Ebenso berücksichtigt werden definierte Produktreihenfolgen, die in der Kommission eingehalten werden sollen.

Die für die Abarbeitung der Kundenaufträge benötigten Waren werden auf Quell-Paletten Q vom übergeordneten Steuerungssystem aus dem Palettenlager 3 vorteilhaft in jener Sequenz ausgelagert, in der sie in den Kundenaufträgen und damit an den Kommissionierarbeitsplätzen A1 - Ai benötigt werden. Die Auslagersequenz der Quell-Paletten Q wird nach der (vorgeschriebenen oder errechneten) Packreihenfolge in Kunden-Transporthilfsmitteln T der Kundenaufträge gebildet und die ausgelagerten Quell-Paletten Q über eine mittels Standard-Fördertechnik errichteter Zuführ-Förderstrecke 6 sequentiell den bemannten Kommissionierarbeitsplätzen A1 - Ai zugeführt. Bei den Quell-Paletten Q handelt es sich entweder um ganze, das heißt noch nicht angebrochen Paletten G oder um im Zuge der Abarbeitung vergangener Kundenaufträge teilweise aufgebrauchte, d.h. angebrochene Paletten.

Die Zuführ-Förderstrecke 6, auf der die Quell-Paletten Q an die Kommissionierarbeitsplätze A1 - Ai angedient werden, ist als bidirektionale Förderstrecke ausgelegt, deren Länge doppelt so groß ist wie die maximale Anzahl der dorthin zur gleichen Zeit auszulagernden Quell-Paletten Q und dient damit als Sortierpuffer. Durch dieses Prinzip ist es möglich, einem jeden Kommissionierarbeitsplatz A1 - Ai in beliebiger Sequenz jede der auf die Zuführ-Förderstrecke 6 ausgelagerten Quell-Paletten Q als nächste Palette anzudienen, und die zeitliche Flexibilität im Palettenlager zu erhöhen.

Unter besonderer Bezugnahme auf Fig. 3 wird nun die Behandlung von Quell-Paletten Q beispielhaft für den Kommissionierarbeitsplatz A1 beschrieben. Die angediente Quell-Palette Q wird auf ein Fahrzeug 13 gefördert, auf dem die Bedienperson B steht und das sich zwischen beidseitig davon angeordneten Packstellen K1 - Kn vor- und zurückbewegt. Mithilfe eines Hebemittels, z.B. eines Hebetisches, wird die Quell-Palette Q in einer für die Bedienperson B ergonomischen Höhe positioniert. Gleichzeitig wird in einer der Packstellen, z.B. der einem ersten Kunden zugeordneten Packstelle K1, ein erstes Kunden-Transporthilfsmittel T, wie z.B. ein Rollwagen, eine Palette, ein Dolly, etc., ebenfalls in einer für die Bedienperson ergonomischen Höhe positioniert. Die Bedienperson B schiebt daraufhin die durch den Kundenauftrag vorgegebene Anzahl an Einheiten der auf der Quell-Palette Q befindlichen Ware auf das Kunden-Transporthilfsmittel T des ersten Kunden. Die Mengeangabe erfolgt für die Bedienperson B über ein geeignetes elektronisches Display. Optional erhält die Bedienperson B Hebehilfsmittel, z.B. einen Vakuumheber, zur Verfügung gestellt. Während die Bedienperson B noch die Kommissionierung für den ersten Kunden an der Packstelle K1 durchführt, positioniert sich auf der anderen Seite der Quell-Palette Q in der Packstelle K2 ein Kunden-Transporthilfsmittel T eines zweiten Kunden in ergonomische Höhe. Sobald die Bedienperson B die Kommissionierung an der ersten Packstation K1 abgeschlossen hat, wendet sie sich der gegenüber liegenden zweiten Packstation K2 zu und arbeitet den zweiten Kundenauftrag ab. Währenddessen positioniert sich bereits ein weiteres Kunden-Transporthilfsmittel T für einen dritten Kunden in ergonomischer Höhe an der nächsten Packstation K3. Nachdem die Bedienperson die zweite Kommissionierung an der zweiten Packstation K2 abgeschlossen hat, fährt das Fahrzeug 13 nach vor zur dritten Packstation K3 und stoppt dort, so dass die Bedienperson die Kommissionierung an der dritten Packstation K3 durchführen kann. Danach erfolgt wie zuvor für die zweite Packstation K2 beschrieben, ein weiterer Kömmissionierungsvorgang in der vierten Packstation K4, usw. Es ist vorgesehen, für einen Kunden immer nur ein Kunden-Transporthilfsmittel T bearbeiten zu lassen, und erst, wenn dieses voll ist, für diesen Kunden das nächste Kunden-Transporthilfsmittel T gleichzeitig zur Befüllung bereitzustellen (kann auch in einer anderen Packstation bereitgestellt werden). Diese Vorgangsweise sichert eine optimale Volumennutzung von Kunden-Transporthilfsmitteln T und Speditionsfahrzeugen. Der beschriebene Kommissionierablauf wiederholt sich so oft wie nötig.

Anschließend wird die jetzt teilweise ("angebrochen") oder vollständig geleerte Palette L vom Kommissionierarbeitsplatz A1 abgezogen und entweder zu einem weiteren Kommissionierarbeitsplatz A2 - Ai weiterbefördert oder über eine Abzugs-Förderstrecke 7 (siehe Fig. 2 oder Fig. 3) ins Palettenlager 3 (angebrochene Paletten, die für spätere Kommissionierungen wieder als Quell-Paletten Q zur Verfügung stehen) oder zu einer Leerpaletten-Entsorgungsstelle zurückbefördert. Gleichzeitig mit dem Abziehen der teilweise oder ganz geleerten Palette L wird am Fahrzeug 13 des Kommissionierarbeitsplatzes A1 die nächste Quell-Palette Q angedient, worauf sich das Fahrzeug in die umgekehrte Richtung in Bewegung setzt und sich die Kommissioniervorgänge für die Packplätze Kn - K1 wiederholen. Wie weiter unten gezeigt wird, befindet sich in einer bevorzugten Variante die Bedienperson B am Fahrzeug 13 immer zwischen zwei Quell-Paletten Q und kommissioniert aus der in Fahrtrichtung gelegenen Quell-Palette.

Es sei erwähnt, dass nicht jedes Kunden-Transporthilfsmittel T Waren aus der "aktiven" Quell-Palette erhalten muss. Vielmehr können einzelne Packstationen auch übersprungen werden. Die Auslegung der Anzahl der Kunden, d.h. die Aktivierung von Packstationen K1 - Kn ist beliebig groß und wird jeweils spezifisch ermittelt. Dabei wird entweder versucht für alle Kunden eines Batches auf allen Kommissionierarbeitsplätzen A1 - Ai jeweils ein Kunden-Transporthilfsmittel T zur Verfügung stellen zu können, um die Anzahl der Quell-Palettenbewegungen zu minimieren, oder es wird versucht an einem Kommissionierarbeitsplatz mit möglichst hoher Wahrscheinlichkeit eine Quell-Palette völlig entleeren zu können, um die Bewegungen von Quell-Paletteen zwischen den Kommissionierarbeitsplätzen zu minimieren.

Fig. 2 zeigt die logischen Pfade für eine Quell-Palette Q zwischen allen Kommissionierarbeitsplätzen A1 - Ai und dem Palettenlager 3. Man erkennt, dass die Quell-Palette Q jedem Kommissionierarbeitsplatz A1 - Ai angedient werden kann, wobei aber auch beliebige ausgelassen werden können und am Ende des Pfades die nun teilweise oder ganz geleerten Palette L abgezogen wird.

In Fig. 3 ist weiters dargestellt, dass C-Artikel im Paletten Pick-to-Belt Lager 4 zur Vervollständigung von Kommissionen zu Einzel-Colli E vereinzelt und diese über eine Förderstrecke 8 mittels Kistenfördertechnik ebenfalls den Kommissionierarbeitsplätzen A1 - Ai angedient werden, wo sie von der jeweiligen Bedienperson in die Kunden-Transporthilfsmittel T gepackt werden. Nach der Vervollständigung eines Kunden-Transporthilfsmittels T gelangt dieses über eine weitere Förderstrecke 9 in einen Warenausgangsbereich 11, wo sie in Speditionsfahrzeuge 12 verladen werden.

Da es vorkommt, dass Kundenaufträge höhere Stückzahlen einer Ware beinhalten, als auf einer ganzen Palette G geladen sind, ist es sinnvoll, diese Ganzpaletten G separat über eine Förderstrecke 5 und optional ein Ganzpalettenzwischenlager 10 in den Warenausgangsbereich 11 zu befördern, wo sie zusammen mit den Kunden-Transporthilfsmitteln T desselben Kundenauftrags in die Speditionsfahrzeuge verladen werden.

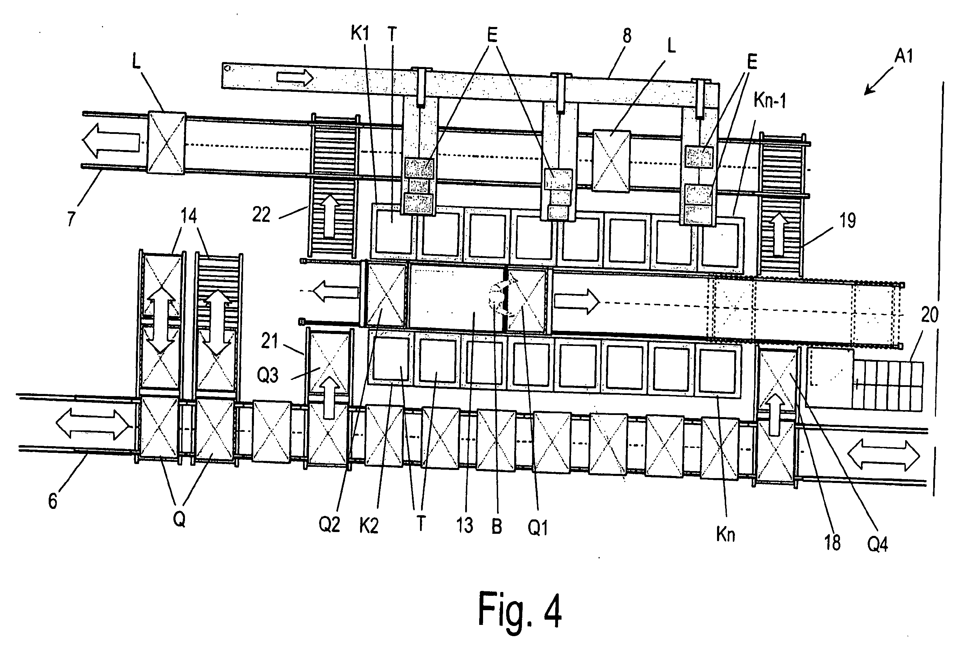

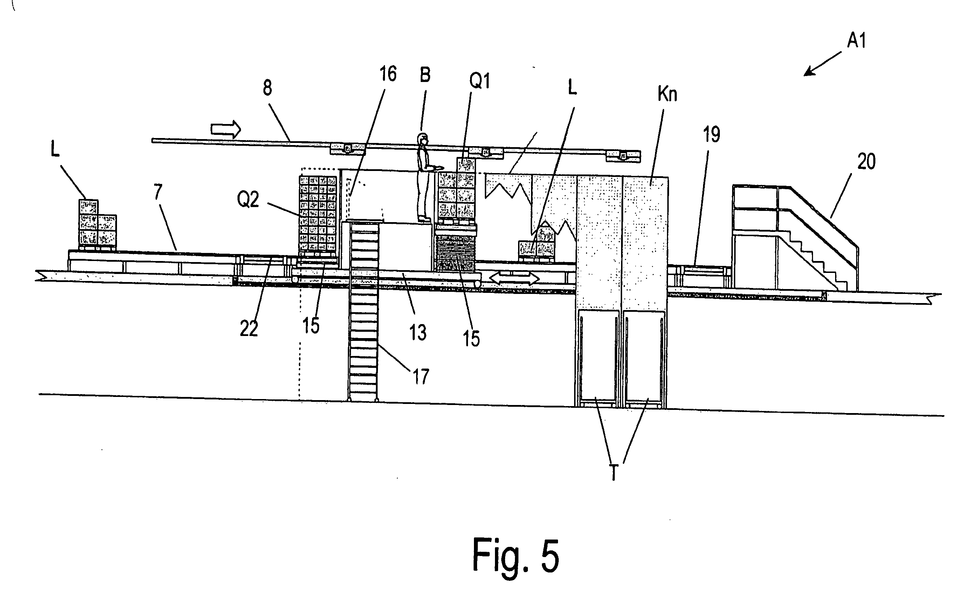

Anhand der Darstellungen von Fig. 4 und Fig. 5 erfolgt nun eine detaillierte Beschreibung eines erfindungsgemäßen Kommissionierarbeitsplatzes A1 und wesentlicher Förderstrecken zu und von dem Kommissionierarbeitsplatz A1.

Über die durch Standard-Fördertechnik realisierte Zuführ-Förderstrecke 6, werden von einem übergeordneten Leitrechner gesteuert Quell-Paletten Q aus dem Palettenlager an den Kommissionierarbeitsplatz A1 angedient. Die Zuführ-Förderstrecke 6 ist als bidirektionale Förderstrecke ausgelegt, deren Länge doppelt so groß ist wie die maximale Anzahl der dorthin zur gleichen Zeit auszulagernden Quell-Paletten Q und dient damit als Sortierpuffer. Zusätzlich oder zur Verkürzung der Länge der Zuführ-Förderstrecke 6 weist diese Zwischenpuffer 14 für Folgepaletten auf. Die Bedienperson des Kommissionierarbeitsplatzes A1 steht auf dem Fahrzeug 13, das sich in Blickrichtung der Bedienperson B bewegt. Links und rechts vom Fahrzeug 13 befinden sich die Packstellen K1 - Kn. Die Bedienperson B hat vor sich eine Quell-Palette Q1, aus der sie gemäß den Kundenaufträgen gerade Waren in Kunden-Transporthilfsmittel T der Packstellen K1 - Kn kommissioniert. Es ist zu beachten, dass die Bedienperson B hinter sich eine zweite Quell-Palette Q2 stehen hat, aus der sie bei der Rückfahrt des Fahrzeugs 13 kommissionieren wird. Es ist weiters zu beachten, dass beide Quell-Paletten Q1, Q2 auf dem Fahrzeug 13 auf Hebetischen 15 stehen, mit denen sie in eine für die Bedienperson ergonomische Höhe gehoben wird. Man erkennt aus der Zeichnung, dass die teilgeleerte Quell-Palette Q1 bereits wesentlich höher steht als die volle Quell-Palette Q2. Es erfolgt eine ständige Nachjustierung der Stellhöhe der Hebetische 15, entweder automatisch oder von der Bedienperson gesteuert.

Aber nicht nur die Quell-Paletten Q1, Q2 auf dem Fahrzeug 13 sind höhenverstellbar gelagert, sondern auch die Kunden-Transporthilfsmittel T in den Packstellen K1 - Kn, die als Schächte ausgebildet sind, in die im Bodenbereich die Kunden-Transporthilfsmittel T ein- und ausgeschleust werden und die während der Kommissionierung mittels nicht dargestellter Hebemittel auf eine für die Bedienperson ergonomische Arbeitshöhe angehoben werden. Dabei ist zur Verhinderung von Fehlkommissionierung vorgesehen, dass immer nur das jeweils zu kommissionierende Kunden-Transporthilfsmittel T in der Arbeitshöhe positioniert wird, wogegen die übrigen Kunden-Transporthilfsmittel in einer für die Bedienperson unerreichbaren Höhe positioniert werden. Dadurch, dass zur gleichen Zeit immer nur eine Quell-Palette Q1, Q2 und ein Kunden-Transporthilfsmittel T "aktiv", d. h. für die Bedienperson B zugreifbar sind, ergibt sich eine systembedingte 0-Fehler-Rate. Weiters können in den Packstationen K1 - Kn automatische Kommissionier-Plausibilitätskontrollen durchgeführt werden, z.B. durch kontinuierliches Wiegen des Kunden-Transporthilfsmittels T. Dadurch kann sichergestellt werden dass die richtige Menge an Waren von der Quell-Palette Q1, Q2 gepickt wird. Hat das Wiegen ergeben, dass die vorgesehene Anzahl an Waren der Quell-Palette Q1, Q2 kommissioniert wurde, wird das Kunden-Transporthilfsmittel T aus der Arbeitshöhe weggefahren und ist somit nicht mehr für die Bedienperson B zugänglich.

Damit die Bedienperson B im Notfall rasch das Fahrzeug verlassen kann, ist eine durch eine Klappe 16 zugängliche Notleiter 17 vorgesehen.

Das Fahrzeug 13 bewegt sich nach vor, bis auch die letzte Packstation Kn kommissioniert ist und bewegt sich dann noch weiter vor, bis die Quell-Palette Q1 eine Stellung zwischen einer Einschleusstation 18 und einer Ausschleusstation 19 einnimmt. In dieser Stellung wird die Quell-Palette Q1 vom Fahrzeug 13 auf die Abzugs-Förderstrecke 7 ausgeschleust und gleichzeitig die schon auf der Einschleusstation 18 bereitgestellte nächste Quell-Palette Q4 auf das Fahrzeug 13 geladen. Die Bedienperson B dreht sich um, das Fahrzeug 13 fährt rückwärts und die Bedienperson B kommissioniert aus der Quell-Palette Q2, bis das Fahrzeug 13 in eine Stellung zwischen einer Einschleusstation 21 mit bereitgestellter nächster Quell-Palette Q3 und einer Ausschleusstation 22 gelangt. In dieser Stellung wird die Quell-Palette Q2 vom Fahrzeug 13 auf die Abzugs-Förderstrecke 7 ausgeschleust und gleichzeitig die Quell-Palette Q3 auf das Fahrzeug 13 geladen. Die auf die Abzugs-Förderstrecke 7 ausgeschleusten teilweise oder ganz geleerten Paletten L werden entweder in das Palettenlager 3 zurückgebracht oder über eine nicht dargestellte Förderschleife wieder auf die Zuführ-Förderstrecke 6 zurückbewegt, um anderen Arbeitsplätzen angedient zu werden (natürlich nur teilweise geleerte Paletten, nicht die leeren).

Mithilfe der Einschleusstationen 18, 21 und der bidirektional verfahrbaren Zuführ-Förderstrecke 6 kann jede beliebige auf der Zuführ-Förderstrecke 6 (bzw. auch in den Zwischenpuffern 14) befindliche Quell-Palette Q in den Kommissionierarbeitsplatz A1 eingeschleust werden, wodurch ein zuverlässiger, billiger Sortierpuffer geschaffen wird. Es sei erwähnt, dass, wenn sich das Fahrzeug 13 in der Zeichnung ganz rechts in einer Endstellung befindet, die Bedienperson B das Fahrzeug 13 über einen Zugang 20 betreten und verlassen kann.

Die Warenkommissionierung aus den Quell-Paletten Q ist für schnell und mittel drehende Waren, das heißt A- und B-Waren ausgelegt. Langsam drehende C-Waren werden in Einzel-Colli E über die Förderstrecke 8 mittels Fördertechnik dem Kommissionierarbeitsplatz A1 angedient und von der Bedienperson B in die Kunden-Transporthilfsmittel T an den vorgesehenen Packstellen K1 - Kn gepackt. Durch diese Integration von Langsamdrehern am gleichen Kommissionierarbeitsplatz erspart man sich für Kundenaufträge, die A-, B- und C-Waren enthalten, ein zweites Kunden-Transporthilfsmittel T. Die Vereinzelung der C-Waren in die Einzel-Colli E erfolgt bereits im Paletten Pick-to-Belt Lager 4, wo die Einzel-Colli E auch manuell auf die Förderstrecke 8 platziert werden, kann alternativ dazu aber auch im Palettenlager 3 erfolgen, wie oben erklärt. Die Förderstrecke 8 umfasst branchenübliche Sortierer für die platzierten Einzel-Colli, so dass sie in der richtigen Reihenfolge und direkt an den Kommissionierarbeitsplätzen angedient werden können.

## Patentansprüche

1. Verfahren zur Kommissionierung von auf Quell-Paletten (Q) in einem Palettenlager (3) gelagerten Waren gemäß Kundenaufträgen, **gekennzeichnet durch** das Zuführen von Quell-Paletten (Q) über eine Zuführ-Förderstrecke (6) zu zumindest einem Kommissionierarbeitsplatz (A1 - Ai), der Packstationen (K1 - Kn) aufweist, in denen Kunden-Transporthilfsmittel (T) zur Aufnahme der zu kommissionierenden Waren bereitgestellt werden, das Kommissionieren **durch** eine Bedienperson (B) von Waren aus der Quell-Palette (Q) in die Kunden-Transporthilfsmittel (T) an all jenen Packstationen (K1 - Kn), die gemäß den Kundenaufträgen Waren aus der Quell-Palette (Q) zu erhalten haben, das Abziehen der Quell-Palette (Q) aus dem Kommissionierarbeitsplatz (A1 - Ai) auf einer Abzugsförderstrecke (7) zurück in das Palettenlager (3) oder zu einem weiteren Kommissionierarbeitsplatz (A1 - Ai), wobei die Quell-Paletten (Q) am Kommissionierarbeitsplatz (A1 - Ai) auf einem Fahrzeug (13) zu den Packstationen (K1 - Kn) bewegt werden, wobei das Fahrzeug (13) einen Arbeitsplatz für eine Bedienperson (B) aufweist.

2. Verfahren nach Anspruch 1, **dadurch gekennzeichnet, dass** die Zuführ-Förderstrecke (6) doppelt so lange ausgelegt wird, wie eine maximal vorgesehene Zahl an zur gleichen Zeit vom Palettenlager (3) zu den Kommissionierarbeitsplätzen (A1 - Ai) auszulagernden Quell-Paletten (Q) erfordern würde, und dass die Zuführ-Förderstrecke (6) bi-direktional verfahrbar ist, wodurch sie als Sortierpuffer für die Quell-Paletten (Q) dient.

3. Verfahren nach einem der vorhergehenden Ansprüche, **dadurch gekennzeichnet, dass** die Quell-Paletten (Q) am Kommissionierarbeitsplatz (A1 - Ai) in Abhängigkeit von ihrer Beladungshöhe und von der Größe der Bedienperson (B) in einer für die Bedienperson (B) ergonomischen Höhe positioniert werden, wobei vorzugsweise die Kunden-Transporthilfsmittel (T) in den Packstationen (K1 - Kn) des Kommissionierarbeitsplatzes (A1 - Ai) in Abhängigkeit von ihrer Beladungshöhe und von der Größe der Bedienperson (B) in einer für die Bedienperson (B) ergonomischen Arbeitshöhe positioniert werden.

4. Verfahren nach Anspruch 3, **dadurch gekennzeichnet, dass** immer nur das jeweils zu kommissionierende Kunden-Transporthilfsmittel (T) in der Arbeitshöhe positioniert wird.

5. Verfahren nach Anspruch 4, **dadurch gekennzeichnet, dass** in jeder Packstation (K1 - Kn) automatische Kommissionier-Plausibilitätskontrollen durchgerührt werden, wie z.B. Wiegen des Kunden-Transporthilfsmittels (T), und bei Erkennen, dass die vorgesehene Anzahl an Waren einer Quell-Palette (Q) kommissioniert wurde, das Kunden-Transporthilfsmittel (T) aus der Arbeitshöhe fährt.

6. System zur Kommissionierung von auf Quell-Paletten (Q) in einem Palettenlager (3) gelagerten Waren gemäß Kundenaufträgen, **gekennzeichnet durch** eine Zuführ-Förderstrecke (6) zum Zuführen von Quell-Paletten (Q) aus dem Palettenlager (3) zu zumindest einem Kommissionierarbeitsplatz (A1 - Ai), der Packstationen (K1 - Kn) aufweist, wobei einem jeden Kundenauftrag zumindest eine Packstation (K1 - Kn) zuordenbar ist, in der ein Kunden-Transporthilfsmittel (T) zur Aufnahme der direkt aus den Quell-Paletten (Q) zu kommissionierenden Waren bereitstellbar ist, und eine Abzugsförderstrecke (7) zum Abziehen von nicht mehr benötigten Quell-Paletten aus dem Kommissionierarbeitsplatz (A1 - Ai) zurück in das Palettenlager (3) oder zu einem weiteren Kommissionierarbeitsplatz (A1 - Ai), wobei der Kommissionierarbeitsplatz (A1 - Ai) ein Fahrzeug (13) zum Verfahren von Quell-Paletten (Q) entlang der Packstationen (K1 - Kn) aufweist, wobei das Fahrzeug (13) einen Arbeitsplatz für die Bedienperson (B) aufweist.

7. System nach Anspruch 6, **dadurch gekennzeichnet, dass** die Zuführ-Förderstrecke (6) doppelt so lange ausgelegt wird, wie eine maximal vorgesehene Zahl an zur gleichen Zeit vom Palettenlager (3) zu den Kommissionierarbeitsplätzen (A1 - Ai) auszulagernden Quell-Paletten (Q) erfordern würde, und dass die Zuführ-Förderstrecke (6) bi-direktional verfahrbar ist, wodurch sie als Sortierpuffer für die Quell-Paletten (Q) dient.

8. System nach Anspruch 6 oder 7, **dadurch gekennzeichnet, dass** das Fahrzeug (13) ein Hebemittel, insbesondere einen Hebetisch (15) aufweist, auf dem die Quell-Paletten (Q) in der Höhe verstellbar positionierbar sind.

9. System nach einem der Ansprüche 6 bis 8, **dadurch gekennzeichnet, dass** die Packstationen (K1 - Kn) Hebemittel aufweisen, mit denen die Kunden-Transporthilfsmittel (T) in der Höhe verstellbar positionierbar sind, wobei vorzugsweise mithilfe des Hebemittels jeweils einer Packstation (K1 - Kn) nur das jeweils zu kommissionierende Kunden-Transporthilfsmittel (T) in einer Arbeitshöhe für eine Bedienperson (B) positioniert wird.

10. System nach Anspruch 9, **dadurch gekennzeichnet, dass** in jeder Packstation (K1 - Kn) automatische Kommissionier-Plausibilitätskontrollmittel, insbesondere Waagen zum Wiegen des Kunden-Transporthilfsmittels (T), vorgesehen sind, wobei die Kommissionier-Plausibilitätskontrollmittel bei Erkennen, dass eine vorgesehene Anzahl an Waren einer Quell-Palette (Q) kommissioniert wurde, die Hebemittel dieser Packstation so steuern, dass das Kunden-Transporthilfsmittel (T) aus der Arbeitshöhe wegfährt.

11. System nach einem der Ansprüche 6 bis 10, **dadurch gekennzeichnet, dass** die Zuführ-Förderstrecke (6) Zwischenpuffer (14) für Folge-Quell-Paletten aufweist.

12. System nach einem der Ansprüche 6 bis 11, **dadurch gekennzeichnet, dass** jeder Kommissionierarbeitsplatz (A1 - Ai) zumindest eine Einschleusstation (18, 21) aufweist, die Quell-Paletten (Q3, Q4) von der Zuführ-Förderstrecke (6) übernimmt, zwischenspeichert und auf das Fahrzeug (13) übergibt.

13. System nach einem der Ansprüche 6 bis 12, **dadurch gekennzeichnet, dass** jeder Kommissionierarbeitsplatz (A1 - Ai) zumindest eine Ausschleusstation (19, 22) aufweist, die Quell-Paletten vom Fahrzeug (13) übernimmt und auf die Abzugs-Förderstrecke (7) übergibt.

## Claims

1. A method for the commissioning of articles stored on source pallets (Q) in a pallet warehouse (3) according to customer orders, **characterized by** the supplying of source pallets (Q) via a supply-conveyor line (6) to at least one commissioning work station (A1-Ai) having packing stations (K1 - Kn), wherein customer-transporting means (T) are provided for picking up the articles to be commissioned, the commissioning by an operator (B) of articles from the source pallet (Q) into the customer-transporting means (T) at all those packing stations (K1 - Kn), which are to receive articles from the source pallet(Q) according to customer orders, the removing of the source pallet (Q) from the commissioning work station (A1 - Ai) via an outlet conveying line (7) back into the pallet warehouse (3) or to another commissioning work station (A1 - Ai), wherein the source pallets (Q) are moved at the commissioning work station (A1 - Ai) on a vehicle (13) to the packing stations (K1 - Kn), wherein the vehicle (13) has a work station for the operator (B).

2. A method according to claim 1, **characterized in that** the supply-conveyor line (6) is configured double the length of the length a maximum number of source pallets (Q) to be removed at the same time from the pallet warehouse (3) to the commissioning work stations (A1 - Ai) would require and that the supply-conveyor line (6) may be transported on bi-directionally, by means of which it serves as a sort buffer for the source pallets (Q).

3. A method according to any of the preceding claims, **characterized in that** the source-pallets (Q) are positioned at the commissioning work station (A1 - Ai), dependent on their loading height and on the size of the operator (B), at a working height that is ergonomic for the operator (B), wheren preferably the customer-transporting means (T) in the packing stations (K1 - Kn) of the commissioning work station (A1 - Ai), dependent on their loading height and on the size of the operator (B), are positioned at a working height that is ergonomic for the operator (B).

4. A method according to claim 3, **characterized in that** there is only positioned at the working height the customer-transporting means (T) to be commissioned.

5. A method according to claim 4, **characterized in that** there are carried out automated commissioning plausibility checks in each packing station (K1 - Kn), such as, e.g., weighing the customer-transporting means (T), and that upon detection that the determined number of articles of a source pallet (Q) has been commissioned the customer-transporting means (T) withdraws from the working height.

6. A system for commissioning articles stored on source pallets (Q) in a pallet warehouse (3) according to customer orders, **characterized by** a supply-conveyor line (6) for supplying source pallets (Q) from the pallet warehouse (3) to at least one commissioning work station (A1-Ai) having packing stations (K1 - Kn), wherein each customer-transporting means (T) may be assigned to at least one packing station (K1 - Kn), wherein a customer-transporting means (T) may be provided for picking up the articles to be directly commissioned from the source pallets (Q), and an outlet conveying line (7) for removing source pallets that are not longer needed from the commissioning work station (A1 - Ai) back into the pallet warehouse (3) or to another commissioning work station (A1 - Ai), wherein the commissioning work station (A1 - Ai) has a vehicle (13) for transporting source pallets (Q) along the packing stations (K1 - Kn), wherein the vehicle has a work station for an operator (B).

7. A system according to claim 6, **characterized in that** the supply-conveyor line (6) is configured double the length of the length a maximum number of source pallets (Q) to be removed at the same time from the pallet warehouse (3) to the commissioning work stations (A1 - Ai) would require and that the supply-conveyor line (6) may be transported on bi-directionally, by means of which it serves as a sort buffer for the source pallets (Q).

8. A system according to claim 6 or 7, **characterized in that** the vehicle (13) has a lifting means, in particular a lifting table (15), onto which the source pallets (Q) may be positioned and adjusted in height.

9. A system according to any of claims 6 to 8, **characterized in that** packing stations (K1 - Kn) have lifting means, by means of which the customer-transporting means (T) may be positioned and adjusted in height, wherein preferably only the customer-transporting means (T) to be commissioned is positioned at a working height for an operator (B) by means of the lifting means of the respective packing station (K1 - Kn).

10. A system according to claim 9, **characterized in that** there are provided in each packing station (K1 - Kn) automated commissioning plausibility check means, in particular scales for weighing the customer-transporting means (T), wherein the commissioning plausibility check means, upon detection that a determined number of articles of a source pallet (Q) has been commissioned, will control the lifting means of this packing station so that the customer-transporting means (T) withdraws from the working height.

11. A system according to any of claims 6 to 10, **characterized in that** the supply-conveyor line (6) has intermediate buffers (14) for subsequent source pallets.

12. A system according to any of claims 6 to 11, **characterized in that** each commissioning work station (A1 - Ai) has at least one inlet station (18, 21), which takes over the source pallets (Q3, Q4) from the supply-conveyor line (6), temporarily stores and conveys these to the vehicle (13).

13. A system according to any of claims 6 to 12, **characterized in that** each commissioning work station (A1 - Ai) has at least one outlet station (19, 22), which takes over the source pallets from the vehicle (13) and conveys these to the outlet conveying line (7).

## Revendications

1. Procédé de préparation d'articles stockés sur des palettes sources (Q) dans un lieu de stockage de palettes (3) selon la commande de clients, **caractérisé par** l'amenée de palettes sources (Q) vers au moins un emplacement de travail de préparation (A1 - Ai), qui présente des stations de conditionnement (K1 - Kn), par l'intermédiaire d'un circuit de transport d'amenée (6), où les moyens de transport des clients (T) sont disposés prêts pour l'admission des articles à préparer, la préparation d'articles, par une personne de service (B), à partir de la palette source (Q) vers les moyens de transport des clients (T) dans chacune des stations de conditionnement (K1 - Kn), qui doivent recevoir les articles commandés par le client à partir de la palette source (Q), le départ de la palette source (Q) de l'emplacement de travail de préparation (A1 - Ai) pour un retour dans le lieu de stockage des palettes (3) ou vers un autre emplacement de travail de préparation (A1 - Ai) sur un circuit de transport d'évacuation (7), les palettes sources (Q) étant déplacées sur un véhicule (13) au niveau de l'emplacement de travail de préparation (A1 - Ai), vers les stations de conditionnement (K1 - Kn), le véhicule (13) présentant un poste de travail pour une personne de service (B).

2. Procédé selon la revendication 1 **caractérisé en ce que** le circuit de transport d'amenée (6) est parcouru sur une distance supérieure à deux fois celle que nécessiterait un nombre maximal prévu de palettes sources (Q) à sortir simultanément du stock du lieu de stockage des palettes (3) vers les emplacements de travail de préparation (A1 - Ai), et que le circuit de transport d'amenée (6) peut être emprunté de manière bidirectionnelle, ce qui lui permet de servir de zone tampon pour le classement des palettes sources (Q).

3. Procédé selon l'une des revendications précédentes **caractérisé en ce que** les palettes sources (Q) sont positionnées de manière ergonomique pour la personne de service (B) en fonction de leur hauteur de chargement et de la taille de la personne de service (B) au niveau de l'emplacement de travail de préparation (A1 - Ai), les moyens de transport des clients (T) dans les stations de conditionnement (K1 - Kn) de l'emplacement de travail de préparation (A1 - Ai) étant positionnés en fonction de leur hauteur de chargement et de la taille de la personne de service (B) à une hauteur de travail ergonomique pour la personne de service (B).

4. Procédé selon la revendication 3 **caractérisé en ce que**, chaque fois, le moyen de transport du client (T) destiné à réceptionner la commande est positionné à la hauteur de travail.

5. Procédé selon la revendication 4 **caractérisé en ce qu'**à chaque station de conditionnement (K1 - Kn), des contrôles automatiques de la vraisemblance de la préparation sont effectués, comme, par exemple, la pesée du moyen de transport du client (T), et en cas de reconnaissance, que le nombre prévu d'articles a été préparé à partir de la palette source (Q), que le moyen de transport du client (T) parte de la hauteur de travail.

6. Système de préparation d'articles stockés sur des palettes sources (Q) dans un lieu de stockage de palettes (3) selon la commande de clients, **caractérisé par** un circuit de transport d'amenée (6) pour la conduite de palettes sources (Q) à partir du lieu de stockage de palettes (3) vers au moins un emplacement de travail de préparation (A1 - Ai), qui présente des stations de conditionnement (K1 - Kn), où au moins une station de conditionnement (K1 - Kn) peut être attribuée à chaque commande de client, où un moyen de transport du client (T) peut être préparé pour la réception directe des articles à préparer à partir des palettes sources (Q), et par un circuit de transport d'évacuation (7) pour l'évacuation des palettes sources qui ne sont plus nécessaires à partir de l'emplacement de travail de préparation (A1 -Ai) pour un retour vers le lieu de stockage des palettes (3) ou vers un autre emplacement de travail de préparation (A1 - Ai), l'emplacement de travail de préparation (A1 - Ai) présentant un véhicule (13) pour le transport de palettes sources (Q) le long des stations de conditionnement (K1 - Kn), le véhicule (13) présentant un poste de travail pour une personne de service (B).

7. Système selon la revendication 6 **caractérisé en ce que** le circuit de transport d'amenée (6) est parcouru sur une distance supérieure à deux fois celle que nécessiterait un nombre maximal prévu de palettes sources (Q) à sortir simultanément du stock du lieu de stockage des palettes (3) vers les emplacements de travail de préparation (A1 - Ai), et que le circuit de transport d'amenée (6) peut être emprunté de manière bidirectionnelle, ce qui lui permet de servir de zone tampon pour le classement des palettes sources (Q).

8. Système selon les revendications 6 ou 7 **caractérisé en ce que** le véhicule (13) présente un moyen de levage, en particulier une table de levage (15) sur laquelle les palettes sources (Q) peuvent être positionnées de manière réglable en hauteur.

9. Système selon l'une des revendications de 6 à 8 **caractérisé en ce que** les stations de conditionnement (K1 - Kn) présentent des moyens de levage avec lesquels les moyens de transport des clients (T) peuvent être positionnés de manière réglable en hauteur, où, de préférence, respectivement, un seul moyen de transport de client (T) à approvisionner par la commande est positionné à une hauteur de travail pour une personne de service (B) à l'aide du moyen de levage d'une station de conditionnement (K1 - Kn).

10. Système selon la revendication 9 **caractérisé en ce que**, dans chaque station de conditionnement (K1 - Kn), des moyens de contrôles automatiques de la vraisemblance de la préparation sont prévus, en particulier, des balances pour la pesée du moyen de transport du client (T), où les moyens de contrôle de la vraisemblance de la préparation, lors de la reconnaissance qu'un nombre prévu d'articles d'une palette source (Q) a été préparé, dirigent les moyens de levage de cette station de conditionnement de telle manière que le moyen de transport du client (T) s'éloigne à partir de la hauteur de travail.

11. Système selon l'une des revendications de 6 à 10 **caractérisé en ce que** le circuit de transport d'amenée (6) présente des zones tampons intermédiaires (14) pour le suivi des palettes sources.

12. Système selon l'une des revendications de 6 à 11 **caractérisé en ce que** chaque emplacement de travail de préparation (A1 -Ai) présente au moins une station d'éclusage (18, 21) qui prend en charge les palettes sources (Q3, Q4) à partir du circuit de transport d'amenée (6), les stocke temporairement et les transpose sur le véhicule (13).

13. Système selon l'une des revendications de 6 à 12 **caractérisé en ce que** chaque emplacement de travail de préparation (A1 - Ai) présente au moins une station d'éclusage (19, 22) qui prend en charge les palettes sources du véhicule (13) et les transmet sur le circuit de transport d'évacuation (7).
